# EUROPEAN PATENT SPECIFICATION

(11) **EP 1 387 748 B1**
(45) Date of publication and mention of the grant of the patent: **07.11.2007**
(21) Application number: 02727491.9
(22) Date of filing: 27.03.2002
(51) Int. Cl.: B29C 35/02

(54) **DEVICE FOR HEATING COMPONENTS OF MACHINES FOR TRANSFORMING SYNTHETIC OR NATURAL RESINS OR RUBBERS**
VORRICHTUNG ZUM ERHITZEN VON MASCHINENELEMENTEN ZUR VERARBEITUNG VON SYNTHETISCHEN- ODER NATUR- HARZEN ODER KAUTSCHUKEN
DISPOSITIF PERMETTANT DE CHAUFFER DES COMPOSANTS DE MACHINES CONCUES POUR LA TRANSFORMATION DE RESINES OU DE CAOUTCHOUCS SYNTHETIQUES OU NATURELS

(30) Priority: 09.05.2001 IT MI20010094
(43) Date of publication of application: 11.02.2004
(73) Proprietor: Ferioli Filippo S.p.A., 21055 Gorla Minore (IT)
(72) Inventor: ROSSI, Albino, I-21055 Gorla Minore (IT)
(74) Representative: Forattini, Amelia
(86) International application number: PCT/EP2002/003441
(87) International publication number: WO 2002/090078

(56) References cited:
- DE-A- 2 819 992
- GB-A- 1 305 102
- US-A- 2 287 320
- US-A- 4 246 226

## Description

The present invention relates to a device for heating components of machines for transforming synthetic or natural resins or rubbers according to the preamble of claim 1.

Various types of source have been tried in transforming resins or rubbers with the purpose of transferring temperature to the molds, extrusion cylinders, et cetera.

The temperatures normally required are between approximately 80 °C and approximately 420 °C and the heat sources used are electric resistors, radiant lamps, steam and induction generators.

The main limitation of heat sources is their insufficient precision in uniformly distributing the temperature, because sources applied directly to the mechanical parts, molds, cylinders, et cetera, must generate higher temperatures and one does not obtain surfaces having uniform temperatures.

A fairly precise technique includes heating diathermic oil by means of resistors (in a separate machine) and pumping the oil into the molds. By using diathermic oil, one obtains good precision and uniformity of temperature, but the rising gradient is very slow and there is the limitation of conveying the oil in flexible hoses at a maximum possible temperature of 250 °C. Moreover, the cost of this application does not allow a widespread use.

The high degree of toxicity of diathermic oil and its high flammability further limit its widespread use.

The use of steam is suitable for large plants and requires high pressure and insulations; moreover, like diathermic oil, it requires separate machines as generators. Also in this case, the rising gradient is very slow.

Radiant lamps and induction generators can only heat perimetric surfaces and therefore radiation spreads from the outside of the parts to be heated, while the core remains colder.

Forming composite components with metals, reinforcement fibers, thermosetting resins, such as for example boards for printed circuits, flexible flat electric resistors, et cetera, requires, in addition to the temperature for the reaction of the resins, a certain pressure and vacuum in order to evacuate the air and reaction gases. The forming process further requires cooling for fixing and size calibration. The machines (presses) used and produced so far provide three of the four functions required by the production cycle, i.e., heating with diathermic oil up to a maximum of 250 °C, pressure, and vacuum; however, in these presses cooling is impossible, because in the same press the plates containing oil and the external central unit to be cooled would require extremely long times. Accordingly, in presses of this kind the method is ended by removing the vacuum and pressure and transferring the components to another press with cooled plates.

DE-2819992 discloses an electric reisistor operating within a powder mass for use in the railway industry.

GB1305102 discloses a continuous method of vulcanizing a rubber article comprises heat treating the article by passing it through a thermally conducting medium comprising a powdered metal.

US4246226 discloses a method and apparatus for utilizing dry pulverulent heated material for curing a tire by positioning a tire encased in a pervious cover within a chamber, filling the chamber with dry pulverulent heated material, utilizing adjustable heating panels in exterior surrounding relationship to the pulverulent material within the chamber to heat the pulverulent material and thus cure the tire, and providing a circulation system for the pulverulent material for feeding the same into and removing the same from the chamber.

US-2287320 discloses a vulcanizing implement composed of a woven fabric container containing an electrical heating unit and a granular material.

The object of the present invention is to provide a device for heating components of machines for transforming synthetic or natural resins or rubbers which overcomes the drawbacks of the cited prior art, to provide a device which is adapted to be applied to a wide variety of machines and for different purposes, and to provide a device which is adapted to provide a uniform temperature in components of machines heated by means of electric resistors.

This object is achieved according to the invention by the device as defined in claim 1.

Particular embodiments of the invention are the subject of the dependent claims.

Further characteristics and advantages of the invention will become better apparent from the description of preferred but not exclusive embodiments thereof, illustrated only by way of non-limitative example in the accompanying drawings, wherein:

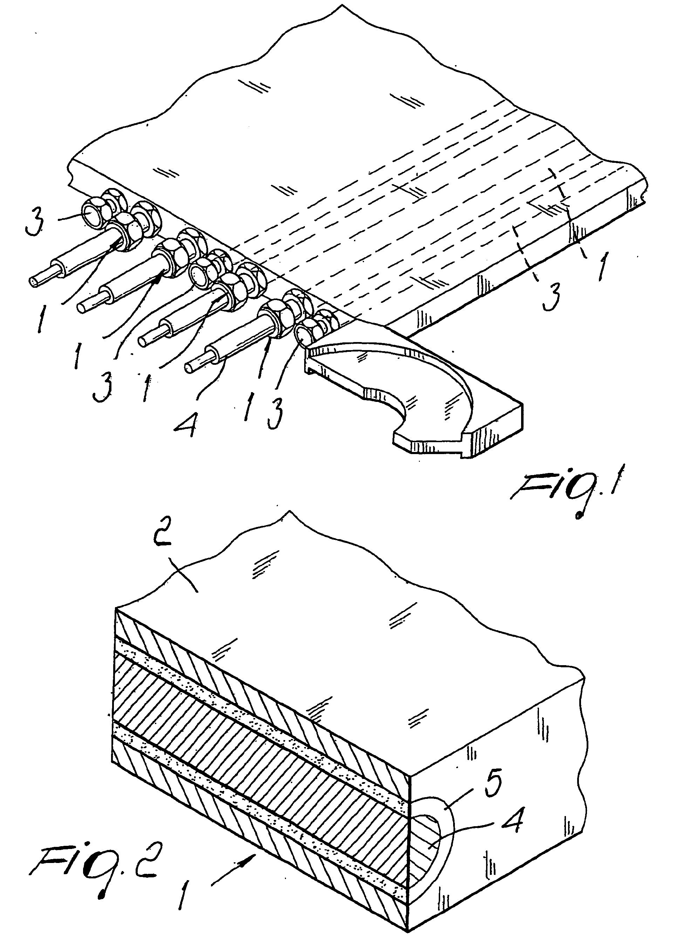

Figure 1 is a schematic partial perspective view of a component of a machine for transforming synthetic or natural resins or rubbers, provided with the heating device according to the invention;
Figure 2 is a partial cutout perspective view of the heating device according to the invention;

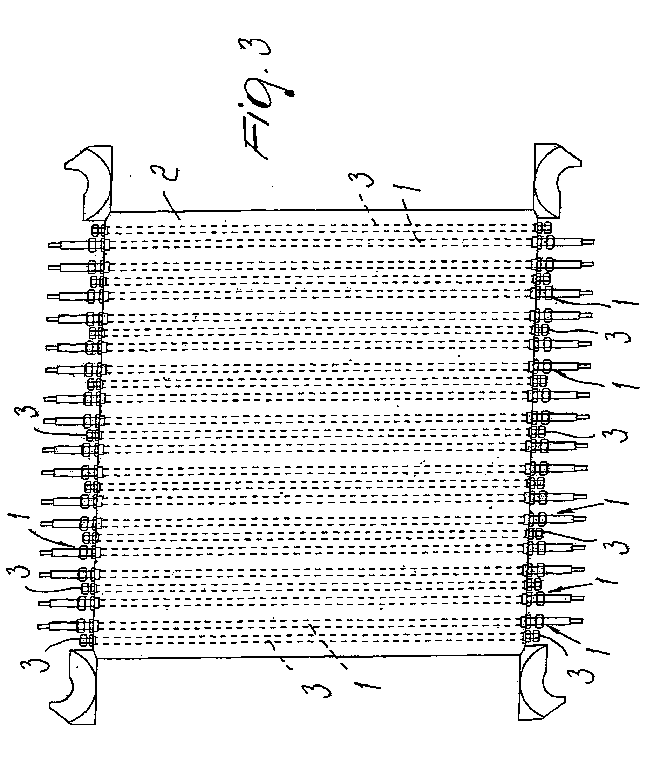

Figure 3 is a plan view of the machine component of Figure 1.

With reference to the above-cited figures, the heating device, generally designated by the reference numeral 1, can be applied to a component of a machine for transforming synthetic or natural resins or rubbers, which in the illustrated example is constituted by a plate 2 which includes a plurality of heating devices 1 alternated with a plurality of tubes 3 for the passage of cooling fluid.

According to the invention, the heating device 1 comprises a heating member, in the specific case an elongated electric resistor 4, which is embedded in the body of the plate 2 with an interposed layer of powder 5.

The purpose of the layer of powder 5 is to constitute a thermal buffer which prevents direct contact between the heating member and the body 2.

The heating member is preferably constituted by an electric resistor, and the thermal buffer 5 can be constituted, according to the invention, by metallic powders and/or metallic oxide powders and/or metal-ceramic powders and/or by refractory powders.

The powders prevent the violent transfer of temperatures from the electric resistors 4 to the components to be heated.

The shapes of the powders can vary in terms of particle size distribution and geometric shape. For example, the powders can be spherical, needle-shaped, aggregate, porous, et cetera.

If the heat absorption coefficient of the powders is known, it is possible to calculate the transfers in order to obtain uniform temperatures at the machine components.

Optionally, the cladding of the resistors that make contact with the machine components can be coated by metallization technology.

In practice it has been observed that the invention achieves the intended aim and object, a device for heating components of machines for transforming synthetic or natural resins or rubbers having been provided which is capable of obtaining a uniform temperature in machine components with electric resistors by means of a thermal buffer interposed between the heating members and the machine component.

The device according to the invention is susceptible of numerous modifications and variations, within the scope of the appended claims.

The materials used, as well as the dimensions, may of course be any according to requirements and to the state of the art.

## Claims

1. A device for heating components of machines for transforming synthetic or natural resins or rubbers, comprising a body (2) of a machine component to be heated and a plurality of elongated heating members (4) embedded in said body, **characterized in that** it comprises a plurality of tubes (3) for the passage of cooling fluid, said plurality of heating members (4) being alternated with said plurality of tubes (3); and **in that** a powder layer (5) being inserted between each of said heating members (4) and said body (2).

2. The device according to claim 1, **characterized in that** said powder comprises one or more of the powders chosen in the group that comprises metallic powders, metallic oxide powders, metal-ceramic powders, refractory powders.

3. The device according to claim 1, **characterized in that** said heating members are constituted by electric resistors (4).

4. The device according to claim 3, **characterized in that** said electric resistors (4) have a cladding, said cladding being coated by metallization technology.

## Patentansprüche

1. Vorrichtung zum Erwärmen von Maschinenteilen zum Transformieren von synthetischen Harzen oder Naturharzen oder Kautschuk, umfassend einen Körper (2) eines zu erwärmenden Maschinenteils und eine Vielzahl von länglichen Heizelementen (4), die in dem Körper eingebettet sind,
**dadurch gekennzeichnet, dass** die Vorrichtung eine Vielzahl von Rohren (3) zum Hindurchleiten eines Kühlfluids umfasst, wobei die Vielzahl von Heizelementen (4) mit der Vielzahl von Rohren (3) alterniert, und dass eine Pulverschicht (5) zwischen jedem der Heizelemente (4) und dem Körper (2) eingebracht ist.

2. Vorrichtung nach Anspruch 1, **dadurch gekennzeichnet, dass** das Pulver ein oder mehrere der Pulver umfasst, die aus der Gruppe ausgewählt sind, die metallische Pulver, Metalloxidpulver, Metall-Keramik-Pulver und hitzebeständig Pulver enthält.

3. Vorrichtung nach Anspruch 1, **dadurch gekennzeichnet, dass** die Heizelemente durch elektrische Widerstände (4) gebildet sind.

4. Vorrichtung nach Anspruch 3, **dadurch gekennzeichnet, dass** die elektrischen Widerstände (4) einen Überzug haben, der durch ein Metallisierungsverfahren beschichtet ist.

## Revendications

1. Dispositif de chauffage de composants de machines de transformation de résines ou caoutchoucs synthétiques ou naturels, comprenant un corps (2) d'un composant de machine à chauffer et une pluralité d'éléments chauffants allongés (4) noyés dans ledit corps, **caractérisé en ce qu'**il comprend une pluralité de tubes (3) pour le passage de fluide de refroidissement, ladite pluralité d'éléments chauffants (4) étant alternée avec ladite pluralité de tubes (3), et **en ce qu'**une couche de poudre (5) est insérée entre chacun desdits éléments chauffants (4) et ledit corps (2).

2. Dispositif selon la revendication 1, **caractérisé en ce que** ladite poudre comprend une ou plusieurs poudres choisies dans le groupe comprenant des poudres métalliques, des poudres d'oxydes métalliques, des poudres métallocéramiques, des poudres réfractaires.

3. Dispositif selon la revendication 1, **caractérisé en ce que** lesdits éléments chauffants sont constitués par des résistances électriques (4).

4. Dispositif selon la revendication 3, **caractérisé en ce que** lesdites résistances électriques (4) possèdent un blindage, ledit blindage étant revêtu par une technologie de métallisation.
